# EUROPÄISCHE PATENTSCHRIFT

(11) **EP 1 752 066 B1**
(45) Veröffentlichungstag und Bekanntmachung des Hinweises auf die Patenterteilung: **11.03.2009**
(21) Anmeldenummer: 05017437.4
(22) Anmeldetag: 11.08.2005
(51) Int. Cl.: A46B 1/00, A46B 9/02, B29C 65/56

(54) **Bürstchen zum Auftragen kosmetischer Massen**
Applicator brush for cosmetic materials
Brosse d'application de matières cosmétiques

(43) Veröffentlichungstag der Anmeldung: 14.02.2007
(73) Patentinhaber: GEKA BRUSH GMBH, 91572 Bechhofen (DE)
(72) Erfinder: Dumler, Norbert, 91522 Ansbach (DE)
(74) Vertreter: Schneck, Herbert

(56) Entgegenhaltungen:
- EP-A- 0 641 718
- US-A- 4 422 986
- US-A- 4 565 205
- US-A- 5 853 011
- US-A1- 2005 034 740
- US-A1- 2005 115 011

## Beschreibung

Die Erfindung richtet sich auf ein Bürstchen zum Auftragen kosmetischer Massen, insbesondere ein Mascara- oder ein Haarfärbebürstchen, welches aus Kunststoff einstückig gespritzt ist und einen ersten Abschnitt zur Verbindung mit einem Stiel und einen zweiten Abschnitt umfasst, wobei der zweite Abschnitt einen Grundkörper aufweist, von welchem sich eine Mehrzahl von Borsten radial nach außen wegerstreckt.

Herkömmlicherweise wurden derartige Bürstchen dadurch hergestellt, dass Borsten zwischen verdrillten Drähten festgelegt wurden. Durch diese Herstellungstechnik bedingt waren die Gestaltungsmöglichkeiten für die Formgebung und Anordnung der Borsten beschränkt.

Demgegenüber muss bei durch Spritzgießen hergestellten Bürstchen im Wesentlichen nur die Entformbarkeit berücksichtigt werden, während im Übrigen eine sehr weitgehende Gestaltungsfreiheit besteht.

Hiervon ausgehend liegt der Erfindung die Aufgabe zu Grunde, unter Ausnutzung der spritzgießtechnischen Möglichkeiten ein Bürstchen zu schaffen, welches optimale Auftrags- und Kämmeigenschaften aufweist und sich durch eine für die Benutzerin angenehme und vorteilhafte Handhabbarkeit auszeichnet.

Diese Aufgabe wird dadurch gelöst, dass der Grundkörper im Querschnitt als Vieleck ausgebildet ist. Insbesondere ist vorgesehen, dass der Grundkörper im Querschnitt unterschiedliche Seitenlängen aufweist, insbesondere rechteckig ist, wobei eine erste Gruppe von Borsten sich von den Schmalseiten des Grundkörpers und eine zweite Gruppe von Borsten sich von den Längsseiten des Grundkörpers wegerstreckt.

Es ist dementsprechend möglich, die unterschiedlichen Seiten des Vielecks, also insbesondere die Schmalseiten und die Längsseiten eines Rechtecks, mit unterschiedlichen Borstenkonfigurationen zu versehen, die dementsprechend unterschiedliche Kämm-, Auftrags- und Transfereigenschaften aufweisen.

Um sich die jeweiligen spezifischen Eigenschaften zu Nutze zu machen braucht die das Bürstchen handhabende Person diese nur um den jeweiligen Vielecks-Winkel, also zum Beispiel um 90°, zu drehen.

Mit Vorteil können die sich von den Schmalseiten wegerstreckenden Borsten im Wesentlichen die gleiche Länge und gegebenenfalls lediglich im Bereich des freien Endes des Grundkörpers eine sich verjüngende Hüllkurve aufweisen.

Andererseits können die sich von den Längsseiten des Grundkörpers wegerstreckenden Borsten wenigstens an einer Seite eine Hüllkurve derart aufweisen, dass diese in Längsrichtung gesehen eine konkave Krümmung aufweist.

Der Grundkörper könnte alternativ auch im Querschnitt durch ein Vieleck mit gleichen Seitenlängen gebildet sein.

Die Hüllkurve kann im Bereich des freien Endes des Grundkörpers sich zum freien Ende hin generell verjüngend ausgebildet sein, wie dies von gedrehten Bürstchen her an sich bekannt ist.

Die Borsten weisen vorzugsweise eine Fußbreite < 0,6 mm auf, sind im Querschnitt rund ausgebildet und mit einer kegeligen Form versehen.

Der Durchmesser der Umhüllenden der Querschnittskonfiguration des Grundkörpers liegt bei 1,5 bis 6,0 mm, vorzugsweise bei ca. 2,5 mm, wobei der Borstenabstand günstiger Weise 0,20 mm bis 2,0 mm beträgt.

Alternativ können die Borsten eine zylinderförmige Konfiguration aufweisen und lediglich im Spitzenbereich konisch oder meißelartig zugespitzt sein.

Die Borsten sind mit Vorteil um den Grundkörper herum kranzartig angeordnet, wobei diese kranzartig angeordneten Borsten im Querschnitt eine kreisförmige Umhüllende besitzen können, und wobei beispielsweise jeder Kranz acht Borsten umfasst.

Zur Erzielung einer hohen Besatzdichte sind die Borsten günstiger Weise im Fußbereich dicht an dicht nebeneinander angeordnet.

Die Borsten von in Längsrichtung aufeinander folgenden Kränzen können gegeneinander derartig winkelversetzt sein, dass die im Querschnitt gesehenen Borstenfüße eine Art dichteste Kugelpackung aufweisen, d. h. mit anderen Worten die maximal mögliche Besatzdichte.

Die Borstendichte an der Peripherie der Kränze beträgt vorzugsweise ca. 5 bis 35 Borsten pro 360°.

Weiterhin kann vorgesehen sein, dass der zur Verbindung mit einem Stiel bestimmte Abschnitt wenigstens teilweise im Querschnitt fünfeckig ausgebildet ist, so dass bei der Befestigung des Stiels durch punktweißes Anpressen oder thermisches Punktschweißen der Press- bzw. Schweißstempel jeweils eine annähernd senkrecht zu seiner Andrückbewegung verlaufende Gegenfläche findet.

Nachfolgend wird die Erfindung an Hand eines bevorzugten Ausführungsbeispiels in Verbindung mit der Zeichnung näher erläutert. Dabei zeigen:
- Fig. 1: eine Seitenansicht eines erfindungsgemäßen Bürstchens,
- Fig. 2: eine gegenüber Fig. 1 um 90° versetzte Seitenansicht,
- Fig. 3: einen Schnitt durch das Bürstchen im Bereich des Grundkörpers,
- Fig. 4: einen Schnitt durch das Bürstchen längs der Linie IV-IV in Fig. 1 und
- Fig. 5: eine perspektivische Ansicht eines erfindungsgemäßen Bürstchens.

Ein in der Zeichnung dargestelltes erfindungsgemäßes Bürstchen 1 umfasst einen ersten Abschnitt 2 zur Verbindung mit einem Stiel und einen zweiten Abschnitt 3 mit einem Grundkörper 4, von welchem sich eine Mehrzahl von Borsten 5 radial wegerstreckt.

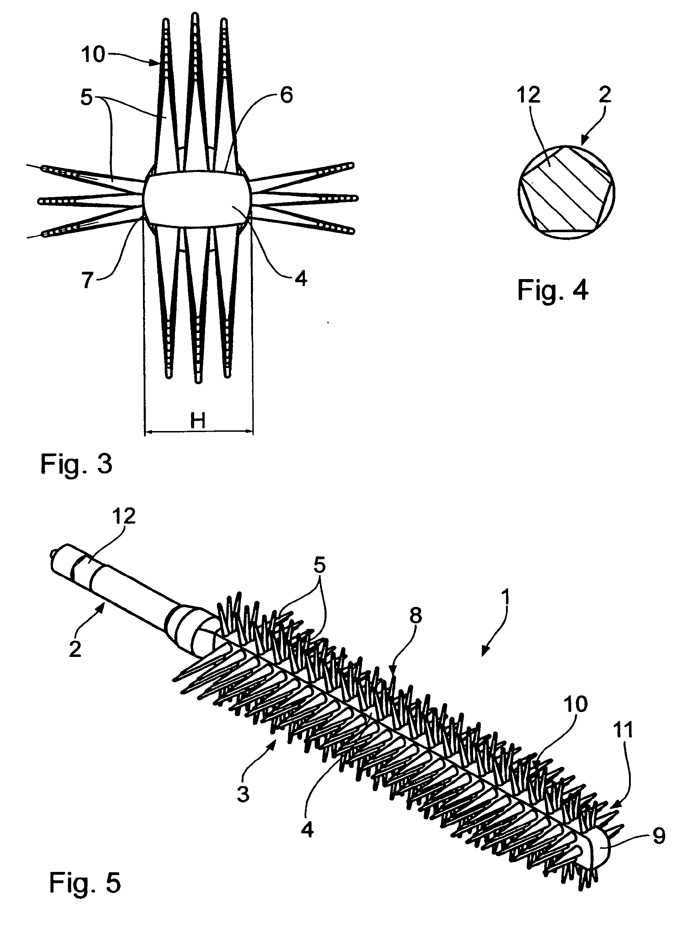

Wie insbesondere aus Fig. 3 zu erkennen ist, weist der Grundkörper 4 einen im Wesentlichen rechteckigen Querschnitt mit Längsseiten 6 und Schmalseiten 7 auf.

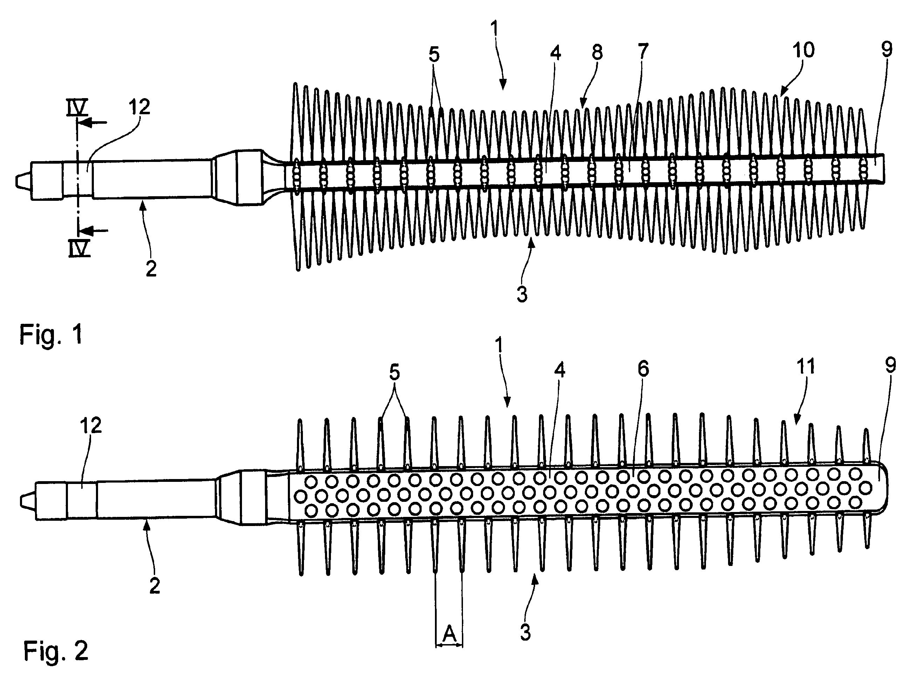

Wie aus Fig. 1 ersichtlich, weisen die Längsseiten 6 einen Besatz mit Borsten 5 auf, dessen Hüllkurve in Längsrichtung gesehen eine konkave Ausnehmung 8 besitzt und sich am freien Ende 9 zu diesem freien Ende 9 hin bei 10 konisch verjüngt. Die Borsten 5 weisen eine kegelförmige Grundform auf. Aus Fig. 2 ist erkennbar, dass die Borsten 5 dicht an dicht nebeneinander angeordnet sind, wobei nebeneinanderliegende Reihen von Borsten in Längsrichtung gesehen gegeneinander versetzt sind, so dass der zur Verfügung stehende Raum optimal ausgenutzt wird und eine Art dichteste Kugelpackung entsteht.

Die Borsten 5 an den Schmalseiten 7 weisen, wie aus Fig. 2 zu entnehmen ist, eine im Wesentlichen zylinderförmige Hüllkurve mit einer kegelförmigen Verjüngung 11 zum freien Ende 9 hin auf.

Durch die vorstehend beschriebene unterschiedliche Gestaltung des Besatzes mit Borsten 5 an den Schmalseiten 7 und den Längsseiten 6 werden unterschiedliche Transfer-, Auftrags- und Kämmeigenschaften erzielt, so dass die Benutzerin durch ein Verdrehen des Bürstchens um 90° zwischen diesen individuellen Eigenschaften wählen kann.

Der erste Abschnitt 2 weist einen Bereich 12 auf, der - wie aus Fig. 4 ersichtlich - im Querschnitt fünfeckig ist, so dass beim Verbinden mit einem diesen Abschnitt hülsenförmig übergreifenden Stiel ein Thermo-PrägeStempel eine im Wesentliche senkrechte Gegenfläche findet.

## Patentansprüche

1. Bürstchen zum Auftragen kosmetischer Massen, insbesondere Mascara-Bürstchen oder Haarfarbe-Bürstchen, welches aus Kunststoff einstückig gespritzt ist und einen ersten Abschnitt zur Verbindung mit einem Stiel und einen zweiten Abschnitt umfasst, wobei der zweite Abschnitt einen Grundkörper aufweist, von welchem sich eine Mehrzahl von Borsten radial nach außen wegerstreckt, **dadurch gekennzeichnet, dass** der Grundkörper (4) im Querschnitt als Vieleck ausgebildet ist, dass der Durchmesser der Umhüllenden (H) der Querschnittskonfiguration des Grundkörpers von 1,5 mm bis 6,0 mm, vorzugsweise ca. 2,5 mm beträgt und dass die Borstendichte an der Peripherie der Kränze beträgt 5 bis 35 Borsten pro 360°.

2. Bürstchen nach Anspruch 1, **dadurch gekennzeichnet, dass** der Grundkörper (4) im Querschnitt unterschiedliche Seitenlängen auf weist, insbesondere rechteckig ist, wobei eine erste Gruppe von Borsten (5) sich von den Schmalseiten (7) des Grundkörpers (4) und eine zweite Gruppe von Borsten (5) sich von den Längsseiten (6) des Grundkörpers (4) wegerstreckt.

3. Bürstchen nach Anspruch 2, **dadurch gekennzeichnet, dass** die sich von den Schmalseiten (7) wegerstreckenden Borsten (5) im Wesentlichen die gleiche Länge und gegebenenfalls lediglich im Bereich des freien Endes (9) des Grundkörpers (4) eine sich verjüngende Umhüllkurve (11) aufweisen.

4. Bürstchen nach Anspruch 3, **dadurch gekennzeichnet, dass** die sich von den Längsseiten (6) des Grundkörpers (4) wegerstreckenden Borsten (5) eine Umhüllkurve (8) derart aufweisen, dass diese in Längsrichtung gesehen eine konkave Krümmung aufweist.

5. Bürstchen nach Anspruch 1, **dadurch gekennzeichnet, dass** der Grundkörper (4) im Querschnitt durch ein Vieleck mit gleichen Seitenlängen gebildet wird.

6. Bürstchen nach Anspruch 3, **dadurch gekennzeichnet, dass** die Umhüllkurve (8) im Bereich des freien Endes (9) des Grundkörpers (4) sich zum freien Ende hin generell verjüngend ausgebildet ist.

7. Bürstchen, insbesondere nach einem der Ansprüche 1 bis 6, **dadurch gekennzeichnet, dass** die Borsten (5) eine Fußbreite < 0,6 mm aufweisen und im Querschnitt rund ausgebildet sind und eine kegelige Form aufweisen.

8. Bürstchen nach Anspruch 7, **dadurch gekennzeichnet, dass** der Borstenabstand (A) zwischen 0,20 mm und 2,00 mm liegt.

9. Bürstchen nach Anspruch 7, **dadurch gekennzeichnet, dass** die Borsten (5) eine zylinderförmige Konfiguration aufweisen und lediglich im Spitzenbereich konisch oder meißelartig zugespitzt sind.

10. Bürstchen nach Anspruch 7, **dadurch gekennzeichnet, dass** die Borsten (5) um dem Grundkörper (4) herum kranzartig angeordnet sind.

11. Bürstchen nach Anspruch 10, **dadurch gekennzeichnet, dass** die kranzartigen Borsten (5) im Querschnitt eine kreisförmige Umhüllende aufweisen.

12. Bürstchen nach Anspruch 10 oder 11, **dadurch gekennzeichnet, dass** jeder Kranz acht Borsten (5) umfasst.

13. Bürstchen nach Anspruch 1, **dadurch gekennzeichnet, dass** die Fußbereiche der Borsten (5) dicht an dicht nebeneinander angeordnet sind.

14. Bürstchen nach Anspruch 12, **dadurch gekennzeichnet, dass** die Borsten (5) von in Längsrichtung aufeinander folgenden Kränzen gegeneinander derart winkelversetzt sind, dass im Querschnitt gesehen die Borstenfüße eine Art dichteste Kugelpackung aufweisen.

15. Bürstchen nach Anspruch 1, **dadurch gekennzeichnet, dass** der zur Verbindung mit einem Stiel bestimmte Abschnitt (2) wenigstens teilweise (Bereich 12) im Querschnitt fünfeckig ausgebildet ist.

## Claims

1. Brush for applying cosmetic substances, especially a mascara brush or hair dying brush, which is injection-molded from plastic material as one piece and comprises a first section for connection to a wand and a second section, said second section having a base body from which a plurality of bristles protrude radially outwardly, **characterized in that** the base body (4) is designed as a polygon in cross section, that the diameter of the envelope (H) of the cross-sectional configuration of the base body is between 1.5 and 6.0 mm, preferably approximately 2.5 mm, and that the bristle density at the periphery of the rings is 5 to 35 bristles per 360°.

2. Brush according to claim 1, **characterized in that** the base body (4) has different side lengths in cross section, that it is rectangular in particular, wherein a first group of bristles (5) extends away from the narrow sides (7) of the base body (4) and a second group of bristles (5) extends away from the longitudinal sides (6) of the base body (4).

3. Brush according to claim 2, **characterized in that** the bristles (5) extending away from the narrow sides (7) have a substantially identical length and optionally a tapered envelope curve (11) only in the region of the free end (9) of the base body (4).

4. Brush according to claim 3, **characterized in that** the bristles (5) extending away from the longitudinal sides (6) of the base body (4) have an envelope curve (8) in such a way that when seen in the longitudinal direction it has a concave curvature.

5. Brush according to claim 1, **characterized in that** the base body (4) in cross section is formed by a polygon with identical side lengths.

6. Brush according to claim 3, **characterized in that** the envelope curve (8) in the region of the free end (9) of the base body (4) is generally formed tapered toward the free end.

7. Brush according to any of claims 1 through 6, **characterized in that** the bristles (5) have a root width < 0.6 mm and are designed round in cross section and have a conical shape.

8. Brush according to claim 7, **characterized in that** the bristle distance (A) is between 0.20 mm and 2.00 mm.

9. Brush according to claim 7, **characterized in that** the bristles (5) have a cylindrical configuration and that they are pointed conically or chisel-like only in the region of their tips.

10. Brush according to claim 7, **characterized in that** the bristles (5) are disposed about the base body (4) in a ring-like configuration.

11. Brush according to claim 10, **characterized in that** the ring-like bristles (5) have a circular envelope in cross section.

12. Brush according to claim 10 or 11, **characterized in that** each ring comprises eight bristles (5).

13. Brush according to claim 1, **characterized in that** the root sections of the bristles (5) are arranged next to each other in close proximity.

14. Brush according to claim 12, **characterized in that** the bristles (5) of consecutive rings in the longitudinal direction are angularly offset relative to each other in such a way that the bristle roots have a kind of most dense sphere packing when seen in cross section.

15. Brush according to claim 1, **characterized in that** the section (2) provided for connection to a wand is at least partly (region 12) designed with a pentagonal cross section.

## Revendications

1. Brosse d'application de matières cosmétiques, en particulier brosse à mascara ou brosse pour teindre les cheveux, qui est moulée par injection d'un seul tenant en matière plastique et comporte une première partie pour la liaison avec un manche et une seconde partie, la seconde partie présentant un corps de base, de laquelle s'étend une pluralité de poils radialement vers l'extérieur, **caractérisée en ce que** le corps de base (4) est réalisé en section transversale comme un polygone, **en ce que** le diamètre de la courbe enveloppante (H) de la configuration de section transversale du corps de base est compris entre 1,5 mm et 6 mm, de préférence s'élève environ à 2,5 mm et **en ce que** la densité des poils sur la périphérie des couronnes est comprise entre 5 et 35 poils par 360 °.

2. Brosse selon la revendication 1, **caractérisée en ce que** le corps de base (4) présente en section transversale différentes longueurs latérales, en particulier est rectangulaire, un premier groupe de poils (5) s'étendant à partir des petits côtés (7) du corps de base (4) et un second groupe de poils (5) à partir des grands côtés (6) du corps de base (4).

3. Brosse selon la revendication 2, **caractérisée en ce que** les poils (5) s'étendant à partir des petits côtés (7) présentent essentiellement la même longueur et éventuellement juste dans la zone de l'extrémité (9) libre du corps de base (4) une courbe enveloppante (11) se rétrécissant.

4. Brosse selon la revendication 3, **caractérisée en ce que** les poils (5) s'étendant à partir des grands côtés (6) du corps de base (4) présentent une courbe enveloppante (8) de sorte que celle-ci présente, vu dans le sens longitudinal, une courbure concave.

5. Brosse selon la revendication 1, **caractérisée en ce que** le corps de base (4) est formé en section transversale par un polygone aux longueurs latérales identiques.

6. Brosse selon la revendication 3, **caractérisée en ce que** la courbe enveloppante (8) est réalisée généralement se rétrécissant vers l'extrémité libre dans la zone de l'extrémité libre (9) du corps de base (4).

7. Brosse, en particulier selon l'une quelconque des revendications 1 à 6, **caractérisée en ce que** les poils (5) présentent une largeur de base < 0,6 mm et sont réalisés ronds en section transversale et présentent une forme conique.

8. Brosse selon la revendication 7, **caractérisée en ce que** la distance entre les poils (A) est comprise entre 0,20 et 2 mm.

9. Brosse selon la revendication 7, **caractérisée en ce que** les poils (5) présentent une configuration cylindrique et sont taillés en cône ou comme un burin juste dans la zone de pointe.

10. Brosse selon la revendication 7, **caractérisée en ce que** les poils (5) sont disposés comme une couronne autour du corps de base (4).

11. Brosse selon la revendication 10, **caractérisée en ce que** les poils (5) de type couronne présentent en section transversale une courbe enveloppante circulaire.

12. Brosse selon la revendication 10 ou 11, **caractérisée en ce que** chaque couronne comporte huit poils (5).

13. Brosse selon la revendication 1, **caractérisée en ce que** les zones de base des poils (5) sont disposées de manière serrée les unes à côté des autres.

14. Brosse selon la revendication 12, **caractérisée en ce que** les poils (5) des couronnes consécutives dans le sens longitudinal sont décalés angulairement les uns contre les autres de telle sorte que, vu en section transversale, les bases de poils présentent un genre d'empilement sphérique très serré.

15. Brosse selon la revendication 1, **caractérisée en ce que** la partie (2) déterminée pour la liaison avec un manche est réalisée au moins en partie (zone 12) en section transversale comme un pentagone.
